# EUROPEAN PATENT APPLICATION

(11) **EP 4 779 196 A1**
(43) Date of publication of application: **22.07.2026**
(21) Application number: 26152224.7
(22) Date of filing: 16.01.2026
(51) Int. Cl.: F16M 11/24

(54) **TRIPOD LEG JOINT AND A TRIPOD**

(30) Priority: 17.01.2025 SE 2530021
(71) Applicant: Nilsson, Peter, 593 93 Västervik (SE)
(72) Inventor: Nilsson, Peter, 593 93 Västervik (SE)
(74) Representative: Industripatent i Växjö AB

(57) **Abstract**

A tripod leg joint is described comprising a flat piece of sheet metal with three tripod leg openings (109) the tripod leg openings being located evenly distributed on a common circle (108). Each opening (109) has a pair of opposing side support sides (111) and a pair of opposing grip sides (112), and a suspension arrangement (107) located at a distance less than 25 mm from the centre of the common circle (108).

## Description

### Technical field

This disclosure relates to a tripod leg joint for a tripod, and a corresponding tripod.

### Background

Tripods have been used for a very long time in different configurations, and thanks to their simplicity and inherent stability (non-rocking) they are very useful for instance in outdoor applications, for example for suspending a game feeding station above ground, e.g. for feeding wild boars. Other possible tripod applications include as a temporary suspension structure used when flaying fallen game, or to suspend a cauldron over open fire.

One problem associated with tripods of this kind is how to assemble the tripod quickly and in a foolproof manner.

### Summary

This object is achieved by a tripod leg joint as defined in claim 1 and correspondingly by a tripod as defined in claim 8.

Thus, a tripod leg joint is considered, comprising a flat piece of sheet metal with three tripod leg openings, the tripod leg openings being located evenly distributed on a common circle. Each opening has a pair of opposing side support sides and a pair of opposing grip sides, and a suspension arrangement located at a distance less than 25 mm from the centre of said common circle. With such a tripod leg joint, a tripod can quickly and easily be assembled by combining the joint with three wooden beams for instance.

The openings may be rectangular, and may optionally be configured to receive a standard-sized beam with an additional gap of less than 5 mm. Such standard sizes include 15x15 mm, 20x20 mm, 45x70 mm, 45x90 mm, or 70x70 mm, for instance.

The midline between the support sides may be oriented radially with regard to the common circle.

The outer periphery of the sheet metal piece may comprise recessed portions in between the openings.

The suspension arrangement may be located at the centre of the common circle.

The present disclosure also considers a tripod, comprising the above-defined tripod leg joint.

### Brief description of the drawings

Figure 1 illustrates a tripod.
Figure 2 is a plan view of a first version of a tripod leg joint.
Figure 3 is a plan view of a second version of a tripod leg joint.
Figure 4 is a plan view of a variation of the first tripod leg joint version.
Figure 5 is a plan view of a variation of the second tripod leg joint version.

### Detailed description

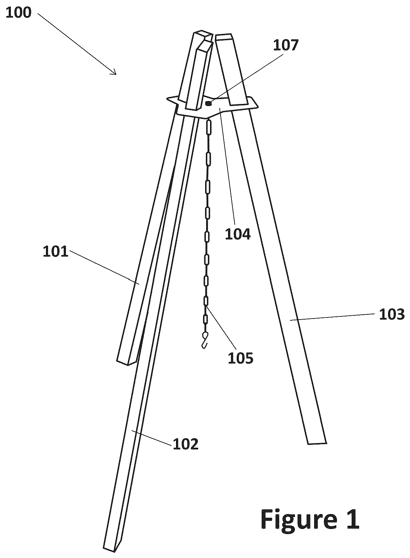

Figure 1 shows a tripod 100 accomplished as disclosed herein. The tripod 100 has three legs 101, 102, 103 which are joined close to their top ends by a tripod leg joint 104. A suspension arrangement 107 is provided that allows the suspension of a chain 105, a rope, a hook or similar from the tripod leg joint 104, holding an object above the ground on which the legs 101, 102, 103 rest.

Here, the legs may comprise standard-sized wooden beams, e.g. in the dimensions 45x45 mm, 45x70 mm, 45x90 mm, or 70x70 mm, for instance. Those legs 101, 102, 103 may together with the tripod leg joint 104 be quickly and readily assembled to form a tripod 100.

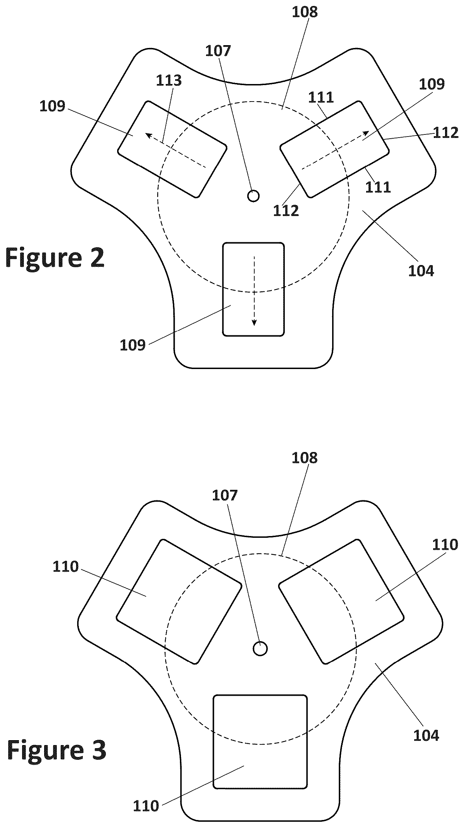

Figure 2 is a plan view of a first version of a tripod leg joint 104. The tripod leg joint 104 may be provided as a single flat piece of sheet metal which is punched, or plasma cut, for instance, to the configuration in figure 2 or any of the subsequent figures.

The sheet metal thickness may typically be in the range between 2-5 mm and suitable materials include steel and aluminium.

The tripod leg joint 104 has three tripod leg openings 109 which are located evenly distributed on a common circle 108, i.e. typically at 0, 120, and 240 degrees with respect to a point on the circle 108. In principle additional openings may be located therebetween.

Each opening 109 has a pair of opposing side support sides 111 and a pair of opposing grip sides 112, which as illustrated may have a generally rectangular configuration with a size suitable for receiving a standard-sized wooden beam in each opening 109, although other beam sizes, materials and cross section shapes would be conceivable with a cross section dedicated for this purpose. A version adapted for beams with quadratic cross section is illustrated in figure 3. In any case, a beam can be inserted into each opening, typically with a few (1-5) millimetres margin to the smallest distance between the pair of opposing grip sides 112. The margin between the support sides 111 can be smaller but is typically capable of dealing with manufacturing tolerances both of the wooden beam and the tripod leg joint 104.

A standard size beam 45x70 mm could use a 47x72 mm opening 109, and similarly for 45x90 mm a 47x92 mm, and 70x70 mm could use a 72x72 mm opening.

Thus, when the wooden beams making up the legs 101, 102, 103 have been inserted into the openings 109, they are angled away from the normal direction of the tripod leg joint 104 plate, outwards to form the tripod. The grip sides 112 of each opening 109 the makes contact with the inserted beam, slightly cutting into the surface thereof. If desired, a screw can be optionally inserted in each leg prior to the insertion to make sure that the legs are equally inserted into the tripod leg joint 104. This is all that is needed to form the tripod.

The form fitting between a rectangular cross section beam and a rectangular opening prevents that the beam rotates in the opening.

A suspension arrangement 107 is located centered or at a distance less than 25 mm from the centre of the aforementioned common circle 108, allowing the suspending of an object from the tripod 100, as illustrated in fig 1 with an even weight distribution on the legs. In figs 2-5, the suspension arrangement 107 is simply a hole through which a bolt can be threaded and fitted with a nut (not shown). However, it would also be possible to weld for instance a hook to the tripod leg joint 104 as a suspension arrangement close to the centre thereof. Needless to say other alternatives exist, for instance two holes could be used to receive a rope.

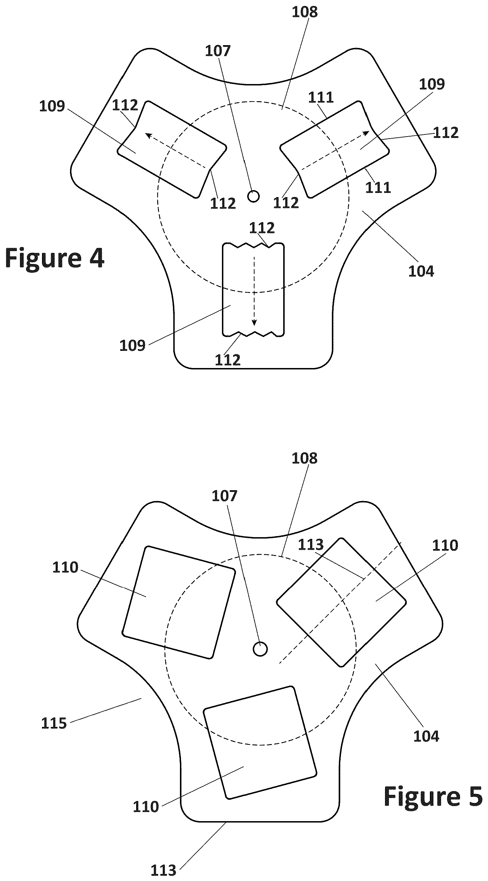

As illustrated in fig 2, in the tripod leg joint 104, the midline 113 between the support sides 111 may be oriented radially with regard to the common circle 108. However, as illustrated in fig 5 this is not necessary, as the openings 109 could be rotated to some extent such that the midline 113 is not aligned with the centre of the circle 108 on which the openings are distributed.

Figure 4 is a plan view illustrating variations of the first tripod leg joint version. The three openings 109 in figure 4 are as an illustration provided with different examples of grip enhancing features used on the grip sides 112 of the openings 109. In the top left version, the grip sides 112 of the opening 109 have a triangular feature forming an obtuse angle point reaching into the opening 109. In the top right version, the point reaching into the opening 109 is rounded. The bottom version has serrated grip sides. This makes the bond between the tripod leg joint 104 and the beam stronger by cutting into the wood in a more pronounced manner. Note however that also the straight grip sides of fig 2, for example, will cut into the wood when the beam is turned out of the normal plane of the tripod leg joint plane. In figure 4, the openings 109 maintain their general rectangular outline such that a beam with rectangular cross section can be inserted therein.

The present tripod can be varied in different ways. For instance, it would be possible to use metal legs, e.g. from extruded aluminium. This would require a slightly wider gap between the leg and the grip sides of the opening, typically about 2-6 mm when the beam forms a normal with the plane of the tripod joint, as the surface of the metal leg would likely not be deformed as much as a wooden beam.

## Claims

1. A tripod leg joint (104), comprising a flat piece of sheet metal with three tripod leg openings (109) the tripod leg openings being located evenly distributed on a common circle (108),
each opening (109) having a pair of opposing side support sides (111) and a pair of opposing grip sides (112), and
a suspension arrangement (107) located at a distance less than 25 mm from the centre of said common circle (108).

2. A tripod leg joint (104) according to claim 1, wherein the openings (109) are rectangular.

3. A tripod leg joint (104) according to claim 2, wherein the openings (109) are configured to receive a standard-sized beam with an additional gap of less than 5 mm.

4. A tripod leg joint (104) according to claim 3, wherein the standard size is one of 15x15 mm, 20x20 mm, 45x70 mm, 45x90 mm, or 70x70 mm.

5. A tripod length joint (104) according to any of the preceding claims,
wherein the midline between the support sides (111) is oriented radially with regard to the common circle (108).

6. A tripod leg joint (104) according to any of the preceding claims,
wherein the outer periphery (113) of the sheet metal piece comprises recessed portions (115) in between the openings (109).

7. A tripod leg joint (104) according to any of the preceding claims,
wherein the suspension arrangement (107) located at the centre of said common circle (108).

8. A tripod, comprising the tripod leg joint (104) according to any of the preceding claims.
